# EUROPÄISCHE PATENTANMELDUNG

(11) **EP 0 953 619 A2**
(43) Veröffentlichungstag der Anmeldung: **03.11.1999**
(21) Anmeldenummer: 99108027.6
(22) Anmeldetag: 23.04.1999
(51) Int. Cl.: C09J 5/02, C09J 5/06, C04B 37/00

(54) **Verfahren zum Verbinden zweier Festkörper und das so hergestellte Bauelement**

(30) Priorität: 28.04.1998 DE 19818962
(71) Anmelder: Degussa-Hüls Aktiengesellschaft, 45764 Marl (DE)
(72) Erfinder: Balz-Sohn, Christoph, Dr., 63452 Hanau (DE); Kräuter, Gertrud, Dr., 06114 Halle (Saale) (DE); Gösele, Ulrich, Professor, 06114 Halle (DE)

(57) **Zusammenfassung**

Die vorliegende Erfindung betrifft ein Verfahren zum Verbinden zweier Festkörper insbesondere aus Silicium über die im wesentlichen glatten Oberlächen, die zuvor mit jeweils einer monomolekularen Schicht eines schwefelhaltigen Organosilans beschichtet worden waren, und die so hergestellten Festkörper, die in der Mikroelektronik oder Mikromechanik eingesetzt werden.

## Beschreibung

Die vorliegende Erfindung betrifft ein Verfahren zum Verbinden zweier Festkörper über die im wesentlichen glatten Oberlächen, die zuvor mit jeweils einer monomolekularen Schicht eines schwefelhaltigen Organosilans beschichtet worden waren und die so hergestellten Festkörper.

Es ist bekannt, daß hinreichend glatte und saubere Festkörperoberflächen über Adhäsionskräfte bei Raumtemperatur miteinander verbunden werden können. Die zunächst schwachen Wechselwirkungen werden durch Wärmebehandlung, die im Falle der Verwendung von Siliciumfestkörpern bei Temperaturen zwischen 800 und 1100 °C durchgeführt wird, soweit verstärkt, daß die Festkörper nicht mehr voneinander getrennt werden können. Dieses Verfahren, das in die Literatur unter den Bezeichnungen "Wafer-Bonden", "Direktbonden" oder "Fusionsbonden" Eingang gefunden hat, hat inzwischen sowohl in der Mikroelektronik als auch in der Mikrosystemtechnik einen wichtigen Platz eingenommen.

Eine Übersicht über die bisher genannten und gemachten Vorschläge ist beispielsweise dem Aufsatz *"History and Future of Semiconducter Wafer Bonding", U. Gösele, H. Stenzel, M. Reiche, T. Martini, H. Steinkirchner und Q.-Y. Tong in "Solid State Phenomena" 47 & 48, Seiten 33 bis 44 (1995)* zu entnehmen.

Wafer-Bonding ist nicht auf das Verbinden aus Silicium bestehenden Festkörpern beschränkt. Viele andere Materialien können auf diese Weise miteinander verbunden werden. Probleme bereiten aber unter anderem die hohen Temperaturen, die benötigt werden, um eine akzeptable Bond-Stärke zu erzielen. Dies führt dazu, daß Bauelemente, die temperaturempfindliche Strukturen enthalten, sowie Materialkombinationen, bei denen die einzelnen Komponenten unterschiedliche thermische Ausdehnungskoeffizienten haben, zur Zeit nicht hinreichend fest gebondet werden können.

Es ist zwar auch ein Verfahren vorgeschlagen worden, bei dem Wafer-Bonding von Silicium Wafern bei Raumtemperatur durchgeführt werden kann. Dieses Verfahren erfordert jedoch, daß die Oberflächen frei von Adsorbaten sind, was nur im UHV erreicht werden kann. Dabei kann die erforderliche Reinheit entweder durch eine thermische Behandlung bei hohen Temperaturen erreicht werden, so daß auch dieses Verfahren für temperaturempfindliche Strukturen nicht geeignet ist oder alternativ hierzu mit einem Plasma-Ätzverfahren herbeigeführt werden muß. Auch dabei kommt es zur Erwärmung der Wafer. Sollte es gelingen, eine hohe Festigkeit bei einem Raumtemperatur-Verfahren zu erzielen, ist es jedoch nicht mehr möglich, die so gebondeteten Strukturen wieder zu trennen.

Ein Verfahren dieser Art ist beispielsweise in der DE-OS 44 09 931 beschrieben. Diese Schrift beschreibt zunächst als Stand der Technik ein Verfahren zum Direktverbinden von Siliciumwafern, bei dem die Oberfläche von Siliciumwafern vorausgehend hochglanzpoliert, mit einer Mischung aus H₂SO₄- und H₂O₂-Lösungen behandelt werden, um die Oberflächen der Wafer hydrophil zu machen (um eine hohe Dichte an Hydroxidgruppen zu erzeugen), und bei Raumtemperatur in engen oder nahen Kontakt zueinander gebracht werden, während Wasser zwischen ihnen vorhanden ist. Die Wafer werden dann thermisch behandelt, um das Wasser zwischen den Wafern durch die Reaktion mit Silicium zu verbrauchen, und die Wafer durch kovalente Siliciumsauerstoffbindungen zu verbinden.

Auch in einigen Varianten der Erfindung nach DE-OS 44 09 931 werden Wassermoleküle auf die Oberfläche der zu verbindenden Wafer gebracht, jedoch nur, um Hydroxidgruppen auf diesen Oberflächen zu bilden. Die restlichen Wassermoleküle werden dann anschließend wieder entfernt und zwar, bevor die Wafer aneinander gebondet werden.

Es verbleibt also in keinem der beiden Fälle eine Zwischenschicht zwischen den aneinander gebondeten Wafern, sondern lediglich kovalente Bindungen, die durch Kondensation der Hydroxidgruppen entstehen.

Die Verbindung zweier Festkörper über vorbehandelte glatte Oberflächen wird in einer nicht vorveröffentlichten Anmeldung beschrieben.

An sich hydrophile Oberflächen werden durch die Umsetzung z. B. mit Alkyltrialkoxysilanen hydrophobiert.

Eine feste Verbindung derartig behandelter Flächen findet dann aufgrund einer Verhakung der langkettigen Alkylreste statt. Kovalente Bindungen können wegen der fehlenden Reaktivität der Alkylrest nicht gebildet werden.

Bei einem anderen bekannten Verfahren benutzt man die Langmuir-Blodgett-Technik zur Beschichtung der Oberflächen, was allerdings aufwendig und teuer ist.

Aufgabe der Erfindung ist es, eine vorteilhaftere Möglichkeit zu schaffen, Feststoffe über kovalente Bindungen bei relativ niedrigen Temperaturen miteinander zu verbinden.

Gegenstand der Erfindung ist ein Verfahren zum Verbinden der im wesentlichen glatten Oberflächen zweier Festkörper miteinander unter Verwendung von Organosiliciumverbindungen dadurch gekennzeichnet, daß man auf die Oberflächen beider Festkörper jeweils eine monomolekulare Schicht einer Verbindung der allgemeinen Formel

S_{y}[(CH₂)ₓSi(OR)₃]₂ (I)

in der bedeuten:
- R:: Methyl, Ethyl, Propyl, insbesondere Methyl, Ethyl,
- x:: 1, 2, 3 oder 4, insbesondere 3,
- y:: 2 - 6, insbesondere 2
aufbringt.
Es erfolgt eine kovalente Anbindung der Moleküle der Verbindung I an die Hydroxyd-Gruppen z. B. der Siliciumoberfläche.
Anschließend werden die Festkörperoberflächen in Kontakt gebracht.

Es bilden sich zunächst van-der-Waals Wechselwirkungen zwischen organischen Molekülen, die an gegenüberliegenden Wafern fixiert sind.
Während einer anschließenden Wärmebehandlung bei ca. 170 ° C brechen die S-S-Bindungen und es bilden sich hochreaktive Spezies mit ungepaarten Elektronen (Radikale).

Reagieren nun zwei Radikale, die an gegenüberliegenden Waferoberflächen gebunden sind, miteinander, so kommt es zur Ausbildung einer kovalenten Bindung in der Grenzfläche (Abb. 1). Die Grenzflächenenergie steigt an (von 20 auf 300 bis 400 mJ/m².

Auf diesem Wege wird es möglich, über in monomolekularer Schicht auf der Substratoberfläche vorliegende Verbindung gemäß Formel (I) derartige Oberflächen kovalent zu verbinden. Kovalente Bindungen besitzen gegenüber den im Stand der Technik beschriebenen van der Waals-Wechselwirkungen oder den Wasserstoffbrückenverbindungen eine deutlich erhöhte Stabilität.

Das erfindungsgemäße Verfahren eignet sich insbesondere für hydrophile Oberflächen. Diese werden gegebenenfalls durch die Behandlung mit z. B. Mischungen aus H₂SO₄- und H₂O₂-Lösungen erzeugt. In einer bevorzugten Ausführungsform

bringt eine der Verbindungen gemäß Formel (I) aus der durch ein organisches Lösungsmittel verdünnten Lösung auf das Substrat (Oberfläche) auf. Die Konzentration der Verbindung gemäß der allgemeinen Formel (I) in diesen Lösungen beläuft sich auf >0 bis ≤ 10⁻³ mol/l.

Als Lösungsmittel sind geeignet: gesättigte cyclische, verzweigte und unverzweigte und aromatische Kohlenwasserstoffe, wie z. B. Toluol, Hexan.
Unter den erfindungsgemäß zu behandelten Feststoffen versteht man insbesondere solche, die aus Silicium, Siliciumdioxid, Saphir (Al₂O₃), Galliumarsenid (GaAS) oder Gold bestehen. Diese Feststoffe (Substrate) verfügen entweder über eine natürliche Oxidschicht (Si,SiO₂, Al₂O₃, GaAS), oder können mit einer oxidischen Schicht überzogen werden z. B. Y-Ba-Cu-O und reagieren daher wie eine hydrophile Si-Oberfläche.

Das Verfahren wird im allgemeinen so durchgeführt:

Ein geeignetes Substrat wird in einer Inertgasatmosphäre einer ca. 10⁻³ molaren Lösung von I in Toluol ausgesetzt. Nach ca. 5 h entfernt man das Substrat aus der Lösung, spült es nacheinander mit Tolual, Aceton, Methanol und behandelt es anschließend zweimal 2 Minuten in Methanol in einem Ultraschallbad.

Dann werden die Lösungsmittelreste durch leichtes Erwärmen bei gleichzeitigem Zentrifugieren (3000 U/min, 5 min) von den Wafern entfernt.
Die Wafer werden nun gründlich mit Reinstwasser gespült, um Staubpartikel zu entfernen, dann zum Trocknen erneut zentrifugiert und anschließend miteinander in Kontakt gebracht. Es bilden sich spontan van der Waals-Kräfte zwischen den an gegenüberliegenden Waferseiten immobilisierten organischen Molekülen aus. Anschließend wird das Waferpaar 5 Minuten auf einer Heizplatte auf 170 ° C erhitzt und dann auf Zimmertemperatur abgekühlt. Nach dieser Behandlung haben sich kovalente Bindungen zwischen den Wafern ausgebildet.

In einer vorteilhaften Ausführungsform wird die Verbindung gemäß Formel (I) in die Gasphase überführt und dann auf der Oberfläche in einer monomolekularen Schicht abgeschieden.

Ein Aufbringen aus der Gasphase kann z. B. in einem Exsiccator erfolgen. Dazu evakuiert man den Exsiccator, in dem sich das Substrat sowie Verbindung I befinden auf einen Druck von wenigen mbar.
Anschließend wird die Verbindung zur Vakuumpumpe unterbrochen. Nach 5 h sind die Substrate mit einer Monolage des organischen Sulfids versehen und können kontaktiert werden, wie oben beschrieben.

In einer Ausführungsform der Erfindung kann man zur Auslösung der Reaktion UV-Licht einstrahlen.

Gegenstand der Erfindung ist ebenso das mit diesem Verfahren hergestellte Bauelement, bestehend aus zwei Festkörpern, deren Oberflächen über die durch die Verbindungen gemäß Formel (I) auf den Oberflächen gebildeten monomolekularen Schichten kovalent aneinander gebunden sind.

Die Abb. 1 gibt diese Bindung beispielhaft wieder, wenn ein Bis (alkoxysilylpropyl) disulfan eingesetzt wird.

Ein Vergleich von nach dem Stand der Technik (LB-Film) und dem erfindungsgemäßen Verfahren (Disulfan Si 266) hergestellten verbundenen Festkörpern (Si) zeigt folgende Ergebnisse:

| **Parameter** | **LB-Film (Adv. Mater. 1997)** | **Si 266 (DEGUSSA)** |
|---|---|---|
| ML in der Grenzfläche | 4 | 2 |
| Dicke der Zwischenschicht | ca. 8 nm | ca. 1 nm |
| Bondstärke bei RT | 100 - 350 mJ/m² | ca. 20 mJ/m² |
| Bondstärke nach T-Behandl. | Zersetzung bei T>60°C | 300-400 mJ/m² (170°C) |
| WW Substrat/Film | van der Waals | kovalente Bindungen |
| WW ML/ML | van der W. + Verhakungen | kovalente Bindungen |
| Abscheide-Methode | Langmuir-Blodgett | Adsorption aus Lösung |
| ML: Monolage RT: Raumtemperatur WW: Wechselwirkung | | |

Durch das Optimieren von Reaktionsparametern können Bondenergien erhöht werden: Si 266 - 20°C: 50 - 80mJ/m²; Si 266 - 160°C (3 min): 400 - 500 mJ/m² oder UV-Licht (365 nm, 7 mm): 750 mJ/m²
Si 69 - 20°C: 60 - 90 mJ/m²; Si 69 - 80°C (3min) oder 20°C (10-14 Tage): 400 mJ/m²

Die Reaktion zwischen 2 Substanzen, die mit einer Monolage Si 266 beschichtet werden, kann durch Einstrahlen von UV-Licht (365 nm, 7 min) ausgelöst werden. Um das Einstrahlen von UV-Licht zu ermöglichen, wird eine Si-Scheibe durch einen Quarzwafer ersetzt.

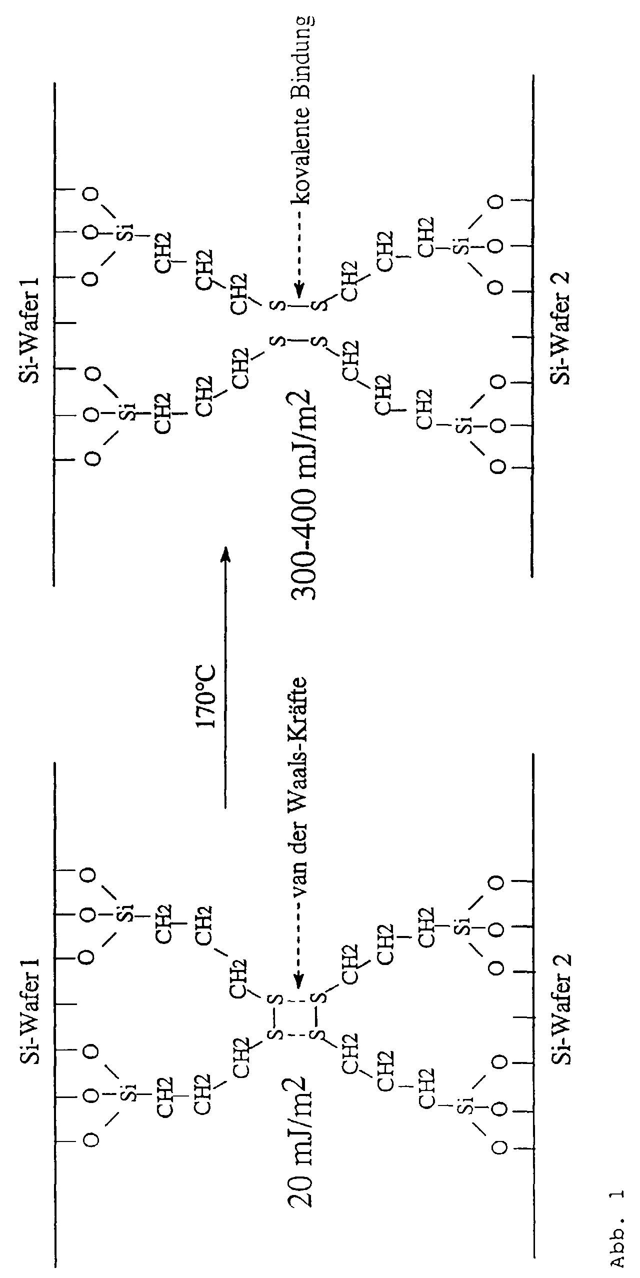

## Patentansprüche

1. Verfahren zum Verbinden der im wesentlichen glatten Oberflächen zweier Festkörper miteinander unter Verwendung von Organosiliciumverbindungen
**dadurch gekennzeichnet**,
daß man auf die Oberflächen beider Festkörper jeweils eine monomolekulare Schicht einer Verbindung der allgemeinen Formel
S_{y}[(CH₂)ₓSi(OR)₃]₂ (I)
in der bedeuten:
R: Methyl, Ethyl, Propyl
x: 1, 2, 3 oder 4,
y: 2 - 6,
aufbringt,
und die Festkörperoberflächen anschließend in Kontakt bringt.

2. Verfahren gemäß Anspruch 1,
**dadurch gekennzeichnet**,
daß man als Verbindung der Formel I ein Bis(alkoxysilylpropyl)disulfan einsetzt.

3. Verfahren gemäß den Ansprüchen 1 und 2,
**dadurch gekennzeichnet**,
daß man Feststoffe mit einer hydrophilen Oberfläche einsetzt.

4. Verfahren gemäß den Ansprüchen 1 bis 3,
**dadurch gekennzeichnet**,
daß man die Verbindung gemäß Formel (I) in Form einer Lösung mit einem Gehalt von >0 bis 10⁻³ mol/l einsetzt.

5. Verfahren nach einem oder mehreren der vorhergehenden Ansprüche,
**dadurch gekennzeichnet**,
daß man das Verfahren bei Temperaturen von 10 bis 30 ° C und eine gegebenenfalls erforderliche Wärmebehandlung bei Temperaturen von 150 bis 200 ° C durchführt.

6. Verfahren gemäß Anspruch 1,
**dadurch gekennzeichnet**,
daß man die Verbindung gemäß Formel (I) aus der Dampfphase aufbringt.

7. Verfahren nach Anspruch 1,
**dadurch gekennzeichnet**,
daß man zur Auslösung der Reaktion UV-Licht einstrahlt.

8. Zusammengesetztes Bauelement, insbesondere für die Mikroelektronik oder für die Mikromechanik, bestehend aus zwei Festkörpern, die über die durch die Verbindungen gemäß (I) gebildeten monomolekularen Schichten auf den Oberflächen verbunden sind.
